(19)

Europäisches
Patentamt
European
Patent Office
Office européen
des brevets

(11) **EP 3 779 911 A1**

(12) **EUROPEAN PATENT APPLICATION**

(43) Date of publication:
**17.02.2021 Bulletin 2021/07**

(21) Application number: **20190192.3**

(22) Date of filing: **10.08.2020**

(51) Int Cl.:
**G08B 17/12** *(2006.01)*          **G08B 25/14** *(2006.01)*
**G08B 7/06** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2019 KR 20190098794**

(71) Applicant: **GSIL Co., Ltd.**
**Seongnam-si, Gyeonggi-do 13488 (KR)**

(72) Inventors:
• **LEE, Jung Woo**
  **Seoul 06802 (KR)**
• **KANG, Yong Suk**
  **Seongnam-si, Gyeonggi-do 13604 (KR)**

(74) Representative: **M. Zardi & Co S.A.**
**Via G. B. Pioda, 6**
**6900 Lugano (CH)**

(54) **METHOD AND SYSTEM FOR MONITORING FIRE**

(57)      Provided is a fire detection method and system, which includes: a video monitoring step of performing real-time video monitoring on a set surveillance space and/or surveillance area; a fire detection step of detecting a fire sign on the basis of analysis of video data; a control step of supporting a control person using a display means to make a decision on whether or not a fire has occurred; a control supplement step of supporting a control supplement function for improving accuracy of the decision-making; a remote control supplement step of supplementing the decision-making on whether or not a fire has occurred by way of remote support in a situation where there is no response from a control person within a set time; and a fire notification step of performing fire notification and warning in a surveillance space and/or a surveillance area where occurrence of fire has been confirmed.

FIG. 1

EP 3 779 911 A1

**Description**

**BACKGROUND OF THE INVENTION**

**Cross Reference To Related Applications**

This application is based on and claims priority from Korean Patent Application No. 10-2019-0098794 filed August 13, 2019, the disclosure of which is incorporated herein by reference.

**Field of the Invention**

The present invention relates to a fire detection method and system, and more specifically, to a fire detection method and system, which can monitor a fire occurrence situation, such as flame, smoke or the like that can be generated at a site, using video monitoring.

**Background of the Related Art**

Generally, in the regions where fire detection is required, fire detection sensors and CCTVs are installed to detect a fire.

When a fire is detected by a CCTV, a user should directly monitor an acquired video to recognize the fire, and when the user is away from the seat or the user does not see the screen although the user is in the seat, the user may not recognize the fire. In addition, in the case of a fire detected by a fire detection sensor, the sensor itself installed in a building should detect smoke or heat as fire information and transmit corresponding information to a central server to complete detection of the fire.

However, in this type of conventional fire detection system, it is often detected as a fire although it is not a fire. That is, as noise is not removed or information similar to a fire is not properly processed in the course of analyzing an acquired video, a moving object, reflected light, artificial light or the like in the video is often detected as a fire.

In addition, when detection of a fire is needed in a wide area, like forest fire monitoring, there is a problem in that since a fire detection sensor may not be installed in each required area due to the limit of resources, the scope of monitoring is limited.

**SUMMARY OF THE INVENTION**

Therefore, the present invention has been made in view of the above problems, and it is an object of the present invention to provide a fire detection method and system, which can remotely monitor occurrence of a fire, such as a flame or smoke that may generate at a site, using video monitoring.

In addition, another object of the present invention is to provide a fire detection method and system, which can improve convenience of decision-making by generating an image of a fire occurrence area in association with information on the drawings of a building structure and supporting the decision-making on whether or not a fire has occurred.

In addition, still another object of the present invention is to provide a fire detection method and system, which can improve accuracy of fire signs by correcting errors of a fire by linking and reflecting information on the environment inside and outside a fire occurrence area.

In addition, still another object of the present invention is to provide a fire detection method and system, which can reduce additional damage caused by fire spread by predicting a fire spread direction and supporting additional control.

In addition, still another object of the present invention is to provide a fire detection method and system, which can additionally match and verify sensor data as needed to prevent a determination error that may occur when a fire is detected based only on video data, and thus improve accuracy of fire detection.

In addition, still another object of the present invention is to provide a fire detection method and system, which can calculate an effective fire evacuation route and/or fire suppression route by distinguishing a fire occurrence area and a fire spread area in association with information on the drawings of a building structure.

In addition, still another object of the present invention is to provide a fire detection method and system, which can improve accuracy of prediction on fire spread by setting a fire spread area on the basis of fire class, wind direction, and wind speed.

In addition, still another object of the present invention is to provide a fire detection method and system, which can classify an occupant and provide differentiated information to the occupant.

In addition, still another object of the present invention is to provide a fire detection method and system, which can set a safe evacuation route and an effective suppression route by monitoring evacuation routes and fire spread in real-time, and provide the routes to evacuees and/or suppressors.

The problems to be achieved by the present invention are not limited to the problems mentioned above, and other problems not mentioned may be clearly understood by those skilled in the art from the following descriptions.

To accomplish the above objects, there is provided a fire detection method comprising: a video monitoring step of performing real-time video monitoring on a set surveillance space and/or surveillance area; a fire detection step of detecting a fire sign on the basis of analysis of video data; a control step of supporting a control person using a display means to make a decision on whether or not a fire has occurred; a control supplement step of supporting a control supplement function for improving accuracy of the decision-making; a remote control supplement step of supplementing the decision-making on whether or not a fire has occurred by way of remote support in a situation where there is no response from a control person within a set time; a fire notification step of performing fire notification and warning in a surveillance space and/or a surveillance area where occurrence of fire has been confirmed; and a fire evacuation step of providing evacuees and suppressors with set information on an optimal fire preparation route and fire suppression route.

In an embodiment of the present invention, the fire detection step may include: a video image acquisition step of acquiring a video image from the video data and partitioning the video image into a plurality of blocks; a video processing step of detecting a flame area and/or a smoke area from the video image partitioned into a plurality of blocks; and a detection result output step of calculating the area and/or number of the detected flame areas and/or smoke areas, comparing the calculated area and/or number of flame areas and/or smoke areas with a fire occurrence reference value, and outputting a comparison result as a detection result of a fire sign.

In an embodiment of the present invention, when a fire sign is detected at the fire detection step, the control step may include: a regional image generation step of generating an image in a 2D or 3D region by reflecting information on drawings of a building structure on the basis of information on a location where the fire sign is detected; an environment correction step of receiving any one or more environmental information among illuminance, temperature, humidity, wind direction, and wind speed of the region through a weather information sensor installed inside and/or outside the building structure, and correcting the detected fire sign; and a fire spread information generation step of calculating and additionally generating a surrounding area in which fire spread is expected within a set time through the region, on the basis of the fire sign and the environmental information.

In an embodiment of the present invention, when a fire sign is detected at the fire detection step, the control supplement step may include: a sensor data collection step of collecting sensor data through a sensor installed at a location corresponding to a region confirmed through the video data; a video-sensing information matching step of matching flame generation and/or smoke generation information confirmed through the video data with generation and/or lasting of abnormal temperature and/or abnormal humidity collected through the sensor data; and a reading verification step of performing a control supplement function by finally determining whether or not a fire has occurred on the basis of a result of the matching.

In an embodiment of the present invention, the fire evacuation step may include: a partitioning step of separating a fire occurrence area and/or a fire spread area; a warning step of performing transmission of a warning broadcast and/or lighting of a warning emergency lamp; and a route notification step of calculating a fire evacuation route and/or a fire suppression route, and selectively informing the evacuees and/or the suppressors of the fire evacuation route and/or the fire suppression route.

In an embodiment of the present invention, the partitioning step may include: a fire occurrence area image generation step of generating an image in a 2D or 3D region by reflecting information on drawings of a building structure on the basis of information on a location corresponding to the fire occurrence area; and a fire spread area image generation step of additionally generating an image of the fire spread area by calculating a fire spread area in which fire spread is expected within a set time through the fire occurrence area on the basis of fire classes of the fire occurrence area and an area in the neighborhood of the fire occurrence area and/or information on wind direction and/or wind speed affecting the fire occurrence area and the neighboring area, and distinguishing the fire occurrence area and the fire spread area.

In an embodiment of the present invention, the route notification step may include: an evacuation route generation step of generating at least one fire evacuation route on the basis of the fire occurrence area, the fire spread area, and passage information of a building structure including the fire occurrence area and the fire spread area; a suppression route generation step of generating at least one fire suppression route on the basis of the fire occurrence area, the fire spread area, and passage information of a building structure including the fire occurrence area and the fire spread area; an occupant characteristic analysis step of confirming whether an occupant located inside the building structure is an evacuee or a suppressor; and a route recommendation step of recommending an evacuation route when the occupant is an evacuee or a suppression route when the occupant is an evacuee.

To accomplish the above objects, there is provided a fire detection system comprising: a video monitoring unit for performing real-time video monitoring on a surveillance space and/or a surveillance area; a fire detection support unit for detecting a fire sign on the basis of analysis of video data; a control unit for supporting a control person using a display means to make a decision on whether or not a fire has occurred; a control supplement unit for supporting a control supplement function for improving accuracy of the decision-making; a remote control supplement unit for supplementing the decision-making on whether or not a fire has occurred by way of remote support in a situation where there is no response from a control person within a set time; a fire notification unit for performing fire notification and warning in a surveillance space and/or a surveillance area where occurrence of fire has been confirmed; and a route information providing unit for providing evacuees and suppressors with set information on an optimal fire preparation route and fire suppression route.

In an embodiment of the present invention, the fire detection unit may include: a video image acquisition unit for acquiring a video image from the video data and partitioning the video image into a plurality of blocks; a video processing unit for detecting a flame area and/or a smoke area from the video image partitioned into a plurality of blocks; and a detection result output unit for calculating the area and/or number of the detected flame areas and/or smoke areas, comparing the calculated area and/or number of flame areas and/or smoke areas with a fire occurrence reference value, and outputting a comparison result as a detection result of a fire sign.

In an embodiment of the present invention, the control support unit may include: a regional image generation unit for generating an image in a 2D or 3D region by reflecting information on the drawings of a building structure on the basis of information on a location where the fire sign is detected; a fire sign correction unit for receiving any one or more environmental information among illuminance, temperature, humidity, wind direction, and wind speed of the region through a weather information sensor installed inside and/or outside the building structure, and correcting the detected fire sign; and a fire spread information generation unit for calculating and additionally generating a surrounding area in which fire spread is expected within a set time through the region, on the basis of the fire sign and the environmental information.

In an embodiment of the present invention, the control supplement unit may include: a sensor data collection unit for collecting sensor data through a sensor installed at a location corresponding to a region confirmed through the video data; an information matching unit for matching flame generation and/or smoke generation information confirmed through the video data with generation and/or lasting of abnormal temperature and/or abnormal humidity collected through the sensor data; and a reading verification unit for performing a control supplement function by finally determining whether or not a fire has occurred on the basis of a result of the matching.

In an embodiment of the present invention, the route information providing unit may include: a fire zone setting unit for separating a fire occurrence area and/or a fire spread area; a fire warning unit for performing transmission of a warning broadcast and/or lighting of a warning emergency lamp; and a fire notification unit for calculating a fire evacuation route and/or a fire suppression route, and selectively informing evacuees and/or suppressors of the fire evacuation route and/or the fire suppression route.

In an embodiment of the present invention, the fire zone setting unit may include: a fire occurrence area image generation unit for generating an image in a 2D or 3D region by reflecting information on the drawings of a building structure on the basis of information on a location corresponding to the fire occurrence area; and a fire spread area setting unit for additionally calculating and setting a fire spread area in which fire spread is expected within a set time through the fire occurrence area on the basis of fire classes of the fire occurrence area and an area in the neighborhood of the fire occurrence area and/or information on wind direction and/or wind speed affecting the fire occurrence area and the neighboring area, and distinguishing the fire occurrence area and the fire spread area.

In an embodiment of the present invention, the fire notification unit may include: an evacuation route generation unit for generating at least one fire evacuation route on the basis of the fire occurrence area, the fire spread area, and passage information of a building structure including the fire occurrence area and the fire spread area; a suppression route generation unit for generating at least one fire suppression route on the basis of the fire occurrence area, the fire spread area, and passage information of a building structure including the fire occurrence area and the fire spread area; an occupant characteristic analysis unit for confirming whether an occupant located inside the building structure is an evacuee or a suppressor; and a route recommendation unit for recommending an evacuation route when the occupant is an evacuee or a suppression route when the occupant is an evacuee.

In an embodiment of the present invention, the route information providing unit may further include: an evacuation route monitoring unit for monitoring an evacuation situation of an evacuee to a set evacuation route; an evacuation risk monitoring unit for confirming in real-time whether the evacuee's evacuation route overlaps with the fire spread area according to spread prediction information in real-time and/or within a set time; and an evacuation route re-setting unit for re-setting the evacuation route when overlapping of the evacuation route and the fire spread area is expected.

## BRIEF DESCRIPTION OF THE DRAWINGS

FIG. 1 is a flowchart illustrating a fire detection method according to an embodiment of the present invention.
FIG. 2 is a flowchart illustrating the fire detection step of FIG. 1 in detail.
FIG. 3 is a flowchart illustrating the flame area detection step of FIG. 1 in detail.

FIG. 4 is a flowchart illustrating the flame area determination step of FIG. 1 in detail.

FIG. 5 is a flowchart illustrating the smoke area detection step of FIG. 1 in detail.

FIG. 6 is a flowchart illustrating the control step of FIG. 1 in detail.

FIG. 7 is a flowchart illustrating the control supplement step of FIG. 1 in detail.

FIG. 8 is a view showing an example related to the control supplement step of FIG. 7.

FIG. 9 is a flowchart illustrating a fire detection method according to another embodiment of the present invention.

FIG. 10 is a flowchart illustrating the fire evacuation step of FIG. 9 in detail.

FIG. 11 is a flowchart illustrating the partitioning step of FIG. 10 in detail.

FIG. 12 is a view showing an example related to the partitioning step of FIG. 10.

FIG. 13 is a flowchart illustrating the route notification step of FIG. 10 in detail.

FIG. 14 is a view showing the configuration of a fire detection system according to still another embodiment of the present invention.

FIG. 15 is a view showing the configuration of the fire detection unit of FIG. 14 in detail.

FIG. 16 is a view showing a graph of receiver handling characteristics.

FIG. 17 is a view showing a video image obtained by the fire detection unit of FIG. 14.

FIG. 18 is a view showing a flame candidate area separated from the video image of FIG. 17.

FIG. 19 is a view showing a flame area determined from the flame candidate area of FIG. 17.

FIG. 20 is a view showing a process of generating a histogram by the fire detection unit of FIG. 14.

FIG. 21 is a view showing a process of detecting the outer periphery of spread smoke by the fire detection unit of FIG. 14.

FIG. 22 is a view showing the configuration of the control support unit of FIG. 14 in detail.

FIG. 23 is a view showing the configuration of the control supplement unit of FIG. 14 in detail.

FIG. 24 is a view showing the configuration of the route information providing unit of FIG. 14 in detail.

FIG. 25 is a view showing the configuration of the fire zone setting unit of FIG. 24 in detail.

FIG. 26 is a view showing the configuration of the route notification unit of FIG. 24 in detail.

## DESCRIPTION OF SYMBOLS

| 100: | Video monitoring unit |
| 200: | Fire detection unit |
| 300: | Control support unit |
| 310: | Control supplement unit |
| 400: | Remote control supplement unit |
| 500: | Fire notification unit |
| 600: | Route information providing unit |

## DETAILED DESCRIPTION OF THE PREFERRED EMBODIMENT

Hereinafter, the present invention will be described with reference to the accompanying drawings. However, the present invention may be implemented in various different forms and accordingly is not limited to the embodiments described here. In addition, the parts unrelated to the description are omitted from drawings to clearly describe the present invention, and like elements are denoted by like reference numerals throughout the specification.

Throughout the specification, when an element is "connected to (link to, in contact with, coupled to)" another element, it includes a case of "indirectly connecting" the elements with intervention of another element therebetween, as well as a case of "directly connecting" the elements. In addition, when an element "includes" a constitutional element, it means further including another constitutional element, not excluding another constitutional element, as far as an opposed description is not specially specified.

The terms used herein are used only to describe a specific embodiment and not intended to limit the present invention. Singular expressions include plural expressions unless the context clearly indicates otherwise. It should be understood that in this specification, terms such as "include" and "have" are intended to indicate existence of features, numbers, steps, operations, components, parts, or combination thereof described in the specification, and the possibility of existence or addition of one or more other features, numbers, steps, operations, components, parts or combinations thereof are not excluded in advance.

Hereinafter, the embodiments of the present invention will be described in detail with reference to the accompanying drawings.

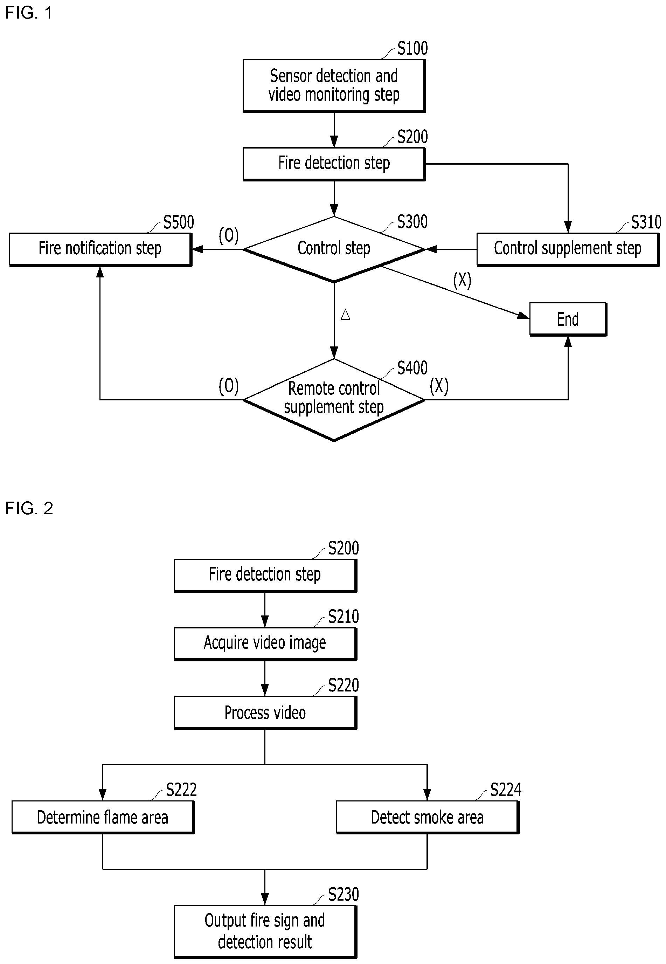

FIG. 1 is a flowchart illustrating a fire detection method according to an embodiment of the present invention.

Referring to FIG. 1, a fire detection method according to an embodiment of the present invention may include a video monitoring step (S100) of performing real-time video monitoring on a surveillance space and/or a surveillance area, a fire detection step (S200) of detecting a fire sign on the basis of analysis of video data, a control step (S300) of supporting a control person using a display means to make a decision on whether or not a fire has occurred, a control supplement step (S310) of supporting a control supplement function for improving accuracy of the decision-making, a remote control supplement step (S400) of supplementing the decision-making on whether or not a fire has occurred by way of remote support in a situation where there is no response from a control person within a set time, and a fire notification step (S500) of performing fire notification and warning in a surveillance space and/or a surveillance area where occurrence of fire has been confirmed.

At the video monitoring step (S100), it is possible to receive a video and perform video monitoring in real-time through a video surveillance device (including a CCTV or the like) installed in a set surveillance space and/or surveillance area.

At the fire detection step (S200), fire signs such as generation of flames and/or smoke may be automatically detected based on video analysis. To this end, referring to FIG. 2, the fire detection step (S200) may include a video image acquisition step (S210) of acquiring a video image from the video data and partitioning the video image into a plurality of blocks, a video processing step (S220) of detecting a flame area and/or a smoke area from the video image partitioned into a plurality of blocks, and a detection result output step (S230) of calculating the area and/or number of the detected flame areas and/or smoke areas, comparing the calculated area and/or number of flame areas and/or smoke areas with a fire occurrence reference value, and outputting a comparison result as a detection result of a fire sign.

At the video image acquisition step (S210), a video image may be acquired from the video received through the video monitoring step (S100), and the video image may be partitioned into a plurality of blocks set in advance.

The video processing step (S220) may include a flame area detection step (S222) of detecting a flame area from a video image by processing the video image partitioned into a plurality of blocks, and/or a smoke area detection step (S224) of detecting a smoke area.

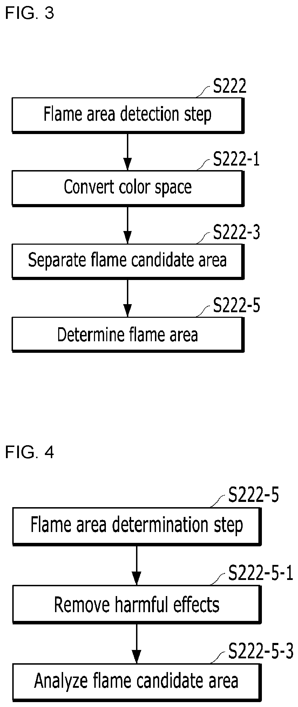

Here, referring to FIG. 3, the flame area detection step (S222) may include a color space conversion step (S222-1) of converting the video image partitioned into a plurality of blocks into a preset YCbCr (a sampling frequency ratio of luminance signal and chrominance signal) color space, a flame candidate separation step (S222-3) of separating a flame candidate area from the partitioned video image, and a flame area determination step (S222-5) of determining a flame area from the flame candidate area by video-processing the flame candidate area.

At this point, referring to FIG. 4, the flame area determination step (S222-5) may include a harmful effect removal step (S222-5-1) of removing harmful effects which generate illuminance from the flame candidate area, and a flame candidate analysis step (S222-5-3) of determining the flame area by analyzing the flame candidate area according to a flame determination criterion.

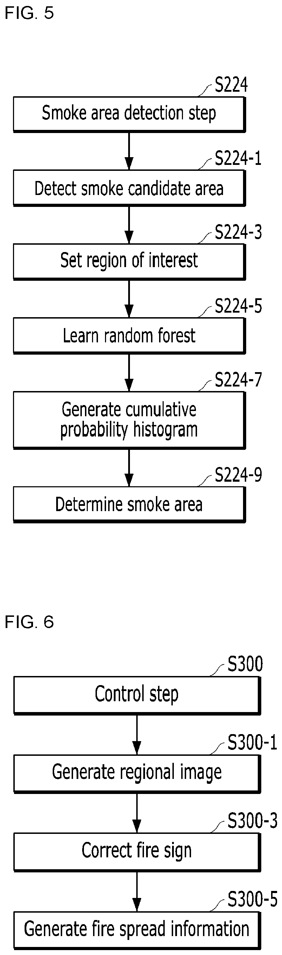

Referring to FIG. 5, the smoke area detection step (S224) may include a smoke candidate area detection step (S224-1) of detecting a smoke candidate area from the video image by applying a random forest classification technique to the video image partitioned into a plurality of blocks, an interest region setting step (S224-3) of comparing continuously photographed video images and setting a block of the smoke candidate area larger than a detection reference value as a region of interest, a random forest learning step (S224-5) of training a plurality of regions of interest to learn a different random forest, a histogram generation step (S224-7) of generating a cumulative probability histogram by accumulating classes generated as a result of learning, and a smoke area determination step (S224-9) of determining a smoke area from the generated histogram.

The detection result output step (S230) may calculate a block area and/or the number of blocks of the detected flame area and/or smoke area, compare the calculated block area and/or number of blocks of the flame area and/or the smoke area with a fire occurrence reference value, and output a detection result of a fire sign when the block area and/or the number of blocks is greater than the fire occurrence reference value.

When a fire sign is detected at the fire detection step (S200), at the control step (S300), a detection result may be notified to the control person as a pop-up notification and/or a sound output on a control terminal of a control person working at a site or a control room receiving the detection result of the fire sign. At this point, at the control step (S300), countermeasures/response may be supported so that the control office may more efficiently inform and warn the site, after finally reviewing the visualized fire occurrence area through the pop-up window. That is, at the control step (S300), the control person may confirm whether or not a fire has occurred through a decision-making support system, after confirming the transmitted pop-up window at the control room.

To this end, referring to FIG. 6, when a fire sign is detected at the fire detection step (S200), the control step (S300) may include a regional image generation step (S300-1) of generating an image in a 2D or 3D region by reflecting information on the drawings of a building structure on the basis of information on a location where the fire sign is detected, an environment correction step (S300-3) of receiving any one or more environmental information among illuminance, temperature, humidity, wind direction, and wind speed of the region through a weather information sensor installed inside and/or outside the building structure, and correcting the detected fire sign, and a fire spread information generation step (S300-5) of calculating and additionally generating a surrounding area in which fire spread is expected within a set time through the region, on the basis of the fire sign and the environmental information.

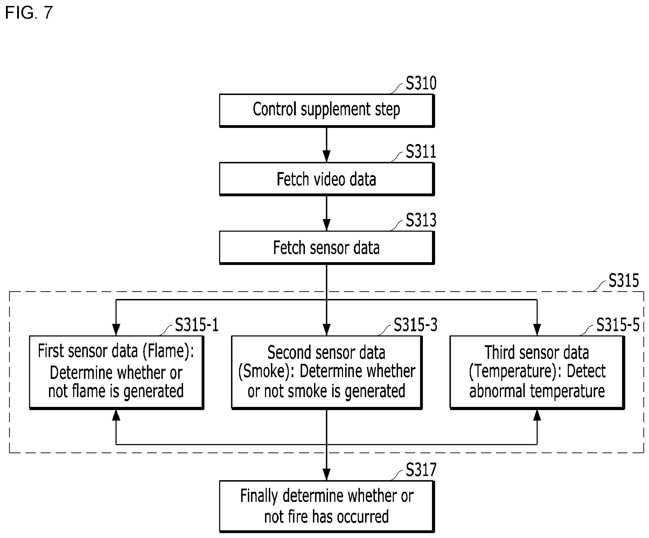

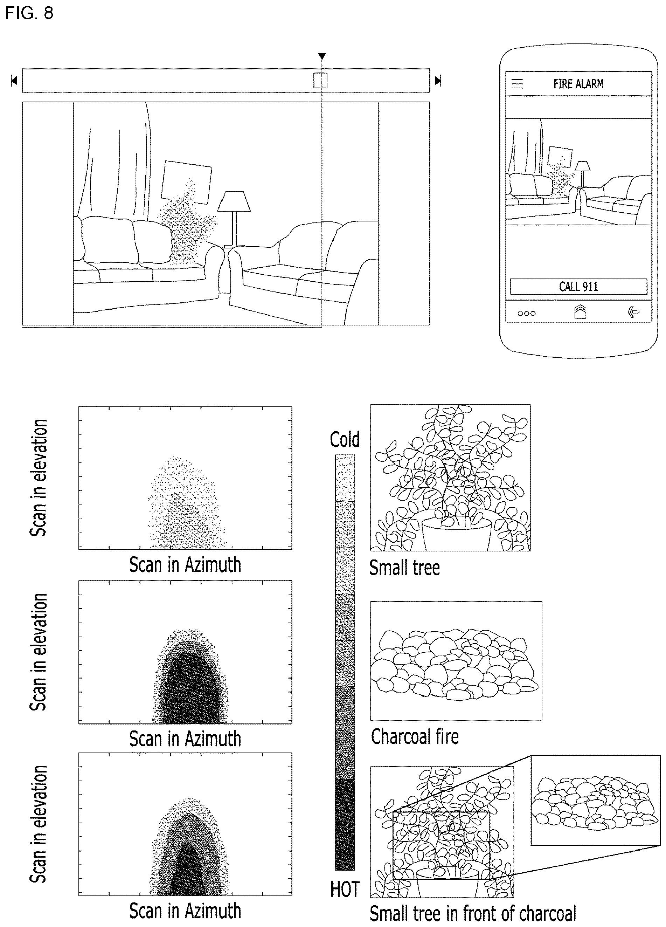

Referring to FIGS. 7 and 8, when a fire sign is detected at the fire detection step (S200), the control supplement step (S310) may include, to improve accuracy of decision-making on whether or not a fire has occurred, a video data collection step (S311) of collecting video data on a surveillance space and/or a surveillance area, a sensor data collection step (S313) of collecting sensor data through a sensor installed at a location corresponding to a region confirmed through the video data, a video-sensing information matching step (S315) of matching flame generation and/or smoke generation information confirmed through the video data with generation and/or lasting of abnormal temperature and/or abnormal humidity collected through the sensor data, and a reading verification step (S317) of performing a control supplement function by finally determining whether or not a fire has occurred on the basis of a result of the matching.

Here, the image-sensing information matching step (S315) may include at least one matching step among a first matching step (S315-1) of determining whether a flame is generated by matching a video data of flame generation and a first sensor data of the flame, a second matching step (S315-2) of determining whether smoke is generated by matching a video data of smoke generation and a second sensor data of the smoke, and a third matching step (S315-3) of detecting an abnormal temperature by matching a video data of the abnormal temperature and a third sensor data of the temperature.

The control supplementary step (S310) is for improving accuracy of determination on whether or not a fire has occurred in a corresponding region through comprehensive analysis using sensor data collected through a sensor for detecting at least one among flame, smoke, temperature and humidity, as well as video data collected through video surveillance devices including a CCTV and the like to more accurately detect and determine whether or not a fire has occurred.

At the remote control supplement step (S400), it is possible to complementarily confirm whether or not a fire has occurred through remote support in a situation in which additional response is required, such as when there is no reaction (response) within a set time from the site and/or the control room. When the decision-making on whether or not a fire has occurred is not processed at the site and/or the control room for a set period of time depending on a situation, the decision-making on whether or not a fire has occurred may be processed by way of remote support to promptly deal with the fire.

For example, after the detection result of a fire sign is notified to a control terminal and/or a portable terminal of a supervisor and/or a colleague of the control person, the decision-making on whether or not a fire has occurred may be received and processed through remote support. In addition, when the control person is not on the site and/or in the control room, the decision-making on whether or not a fire has occurred may be received and processed through remote support after the detection result of a fire sign is notified to the portable terminal, as well as the control terminal.

At the fire notification step (S500), it is possible to perform notification and/or warning of a fire in a surveillance space and/or a surveillance area where occurrence of fire has been confirmed, and support subsequent actions such as fire evacuation or the like. For example, at the fire notification step (S500), a fire notification broadcast may be transmitted using a speaker, or a fire indication lamp may be turned on using a lighting device.

A fire detection method according to an embodiment of the present invention may remotely monitor occurrence of a fire, such as a flame or smoke that may generate at a site, using video monitoring.

In addition, a fire detection method according to an embodiment of the present invention may improve convenience of decision-making by generating an image of a fire occurrence area in association with information on the drawings of a building structure and supporting the decision-making on whether or not a fire has occurred.

In addition, a fire detection method according to an embodiment of the present invention may improve accuracy of fire signs by correcting errors of a fire by linking and reflecting information on the environment inside and outside a fire occurrence area.

In addition, a fire detection method according to an embodiment of the present invention may reduce additional damage caused by fire spread by predicting a fire spread direction and supporting additional control.

In addition, a fire detection method according to an embodiment of the present invention may additionally match and verify sensor data as needed to prevent a determination error that may occur when a fire is detected based only on video data, and thus improve accuracy of fire detection.

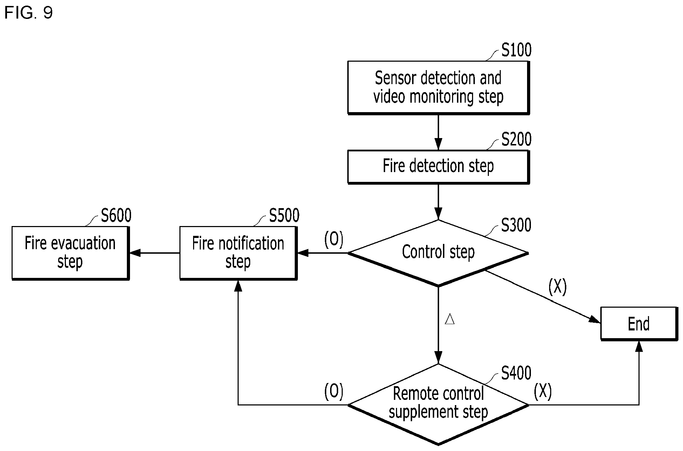

Hereinafter, a fire detection method according to another embodiment of the present invention will be described with reference to FIGS. 9 to 13.

FIG. 9 is a flowchart illustrating a fire detection method according to another embodiment of the present invention.

Referring to FIG. 9, a fire detection method according to another embodiment of the present invention may include a video monitoring step (S100) of performing real-time video monitoring on a surveillance space and/or a surveillance area, a fire detection step (S200) of detecting a fire sign on the basis of analysis of video data, a control step (S300) of supporting a control person using a display means to make a decision on whether or not a fire has occurred, a control supplement step (S310) of supporting a control supplement function for improving accuracy of the decision-making, a remote control supplement step (S400) of supplementing the decision-making on whether or not a fire has occurred by way of remote support in a situation where there is no response from a control person within a set time, a fire notification step (S500) of performing fire notification and warning in a surveillance space and/or a surveillance area where occurrence of fire has been confirmed, and a fire evacuation step (S600) of providing evacuees and suppressors with set information on an optimal fire preparation route and fire suppression route.

Here, for convenience of description, only the fire evacuation step (S600) different from the fire detection method described with reference to FIG. 1 will be described in detail.

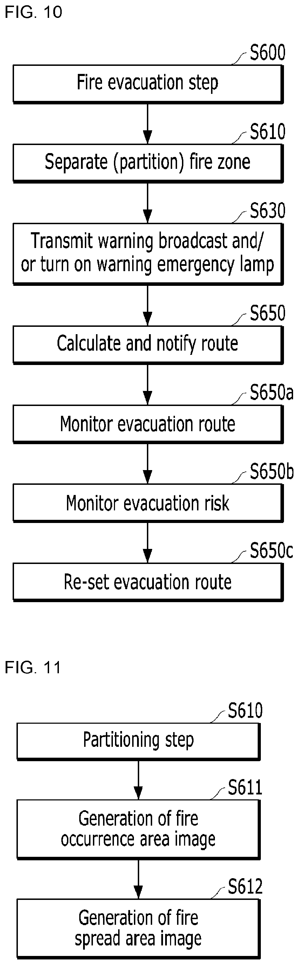

Specifically, referring to FIG. 10, the fire evacuation step (S600) may include a partitioning step (S610) of separating a fire occurrence area and/or a fire spread area, a warning step (S630) of performing transmission of a warning broadcast and/or lighting of a warning emergency lamp, and a route notification step (S650) of calculating a fire evacuation route and/or a fire suppression route, and selectively informing the evacuees and/or the suppressors of the fire evacuation route and/or the fire suppression route.

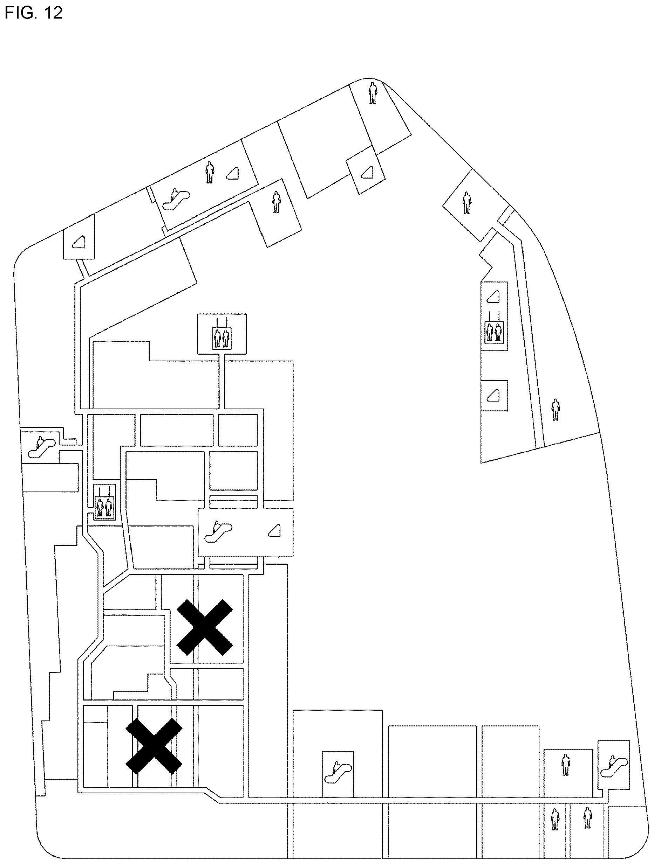

At the partitioning step (S610), a fire occurrence area and/or a fire spread area may be distinguished in association with information on the drawings of a building structure including at least one among a plan view, an elevation view, and a cross-sectional view. To this end, referring to FIGS. 11 and 12, the partitioning step (S610) may include a fire occurrence area image generation step (S611) of generating an image in a 2D or 3D region by reflecting information on the drawings of a building structure on the basis of information on a location corresponding to the fire occurrence area, and a fire spread area image generation step (S612) of additionally generating an image of the fire spread area by calculating a fire spread area in which fire spread is expected within a set time through the fire occurrence area on the basis of fire classes of the fire occurrence area and an area in the neighborhood of the fire occurrence area and/or information on wind direction and/or wind speed affecting the fire occurrence area and the neighboring area, and distinguishing the fire occurrence area and the fire spread area.

Here, the fire class may be set to a fire safety class for buildings classified into a flame-retardant material, a semi-noncombustible material, and a noncombustible material.

At the warning step (S630), a broadcast signal may be transmitted to output a warning broadcast using a speaker, or a lighting signal may be transmitted to turn on a warning emergency lamp using a warning display device.

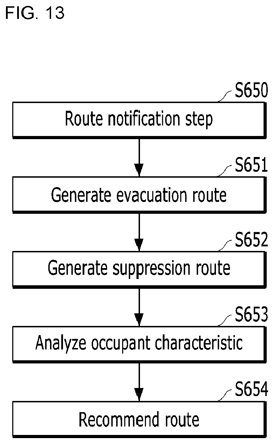

Referring to FIG. 13, the route notification step (S650) may include an evacuation route generation step (S651) of generating at least one fire evacuation route on the basis of fire occurrence area information (image), fire spread area information (image), and passage information of a building structure including the fire occurrence area and the fire spread area, a suppression route generation step (S652) of generating at least one fire suppression route on the basis of fire occurrence area information (image), fire spread area information (image), and passage information of a building structure including the fire occurrence area and the fire spread area, an occupant characteristic analysis step (S653) of confirming whether an occupant located inside the building structure is an evacuee or a suppressor to classify the occupant and provide differentiated information, and a route recommendation step (S654) of recommending an evacuation route when the occupant is an evacuee or a suppression route when the occupant is an evacuee.

At the route notification step (S650) like this, a fire evacuation route and/or a fire suppression route may be guided by setting a display color and/or a flashing pattern of a previously installed route display device including an emergency exit guide signboard.

Meanwhile, referring to FIG. 10 again, the fire evacuation step (S600) may further include, after the route notification step (S650), to perform real-time evacuation route monitoring and fire spread monitoring, an evacuation route monitoring step (S650a) of monitoring an evacuation situation of an evacuee to a set evacuation route, an evacuation risk monitoring step (S650b) of confirming in real-time whether the evacuee's evacuation route overlaps with the fire spread area according to spread prediction information in real-time and/or within a set time, and an evacuation route re-setting step (S650c) of re-setting the evacuation route when overlapping of the evacuation route and the fire spread area is expected.

A fire detection method according to another embodiment of the present invention may calculate an effective fire evacuation route and/or fire suppression route by distinguishing a fire occurrence area and a fire spread area in association with information on the drawings of a building structure.

In addition, a fire detection method according to another embodiment of the present invention may improve accuracy of prediction on fire spread by setting a fire spread area on the basis of fire class, wind direction, and wind speed.

In addition, a fire detection method according to another embodiment of the present invention may classify an occupant and provide differentiated information to the occupant.

In addition, a fire detection method according to another embodiment of the present invention may set a safe evacuation route and an effective suppression route by monitoring evacuation routes and fire spread in real-time, and provide the routes to evacuees and/or suppressors.

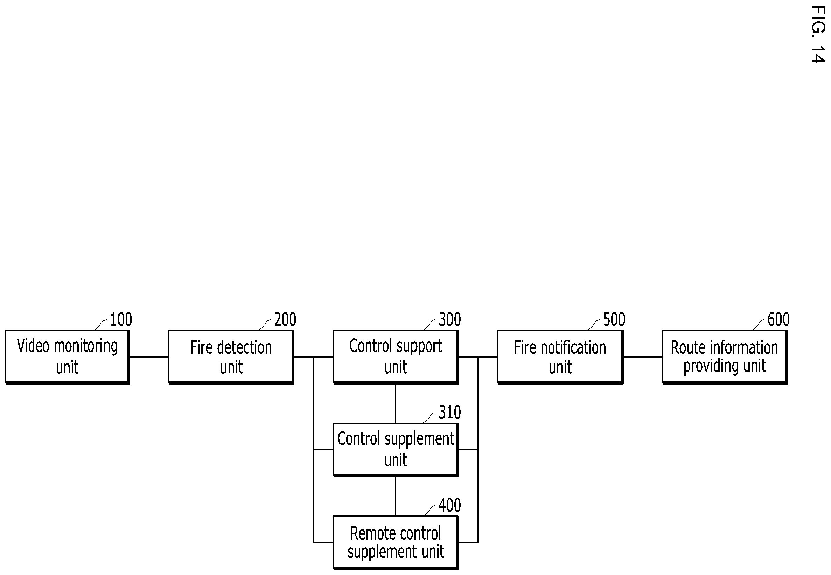

Hereinafter, a fire detection system according to still another embodiment of the present invention will be described in detail with reference to FIGS. 14 to 26.

FIG. 14 is a view showing the configuration of a fire detection system according to still another embodiment of the present invention.

Referring to FIG. 14, a fire detection system according to still another embodiment of the present invention may include a video monitoring unit 100 for performing real-time video monitoring on a surveillance space and/or a surveillance area, a fire detection support unit 200 for detecting a fire sign on the basis of analysis of video data, a control unit 300 for supporting a control person using a display means to make a decision on whether or not a fire has occurred, a control supplement unit 310 for supporting a control supplement function for improving accuracy of the decision-making, a remote control supplement unit 400 for supplementing the decision-making on whether or not a fire has occurred by way of remote support in a situation where there is no response from a control person within a set time, a fire notification unit 500 for performing fire notification and warning in a surveillance space and/or a surveillance area where occurrence of fire has been confirmed, and a route information providing unit 600 for providing evacuees and suppressors with set information on an optimal fire preparation route and fire suppression route.

Specifically, the video monitoring unit 100 may receive a video and perform video monitoring in real-time through a video surveillance device (including a CCTV or the like) installed in a set surveillance space and/or surveillance area.

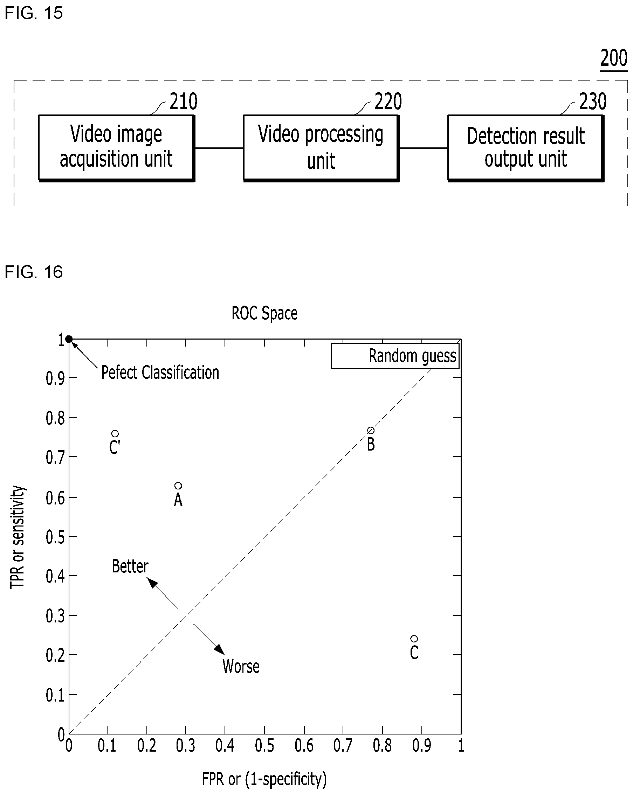

Referring to FIG. 15, the fire detection unit 200 may automatically detect fire signs such as generation of flames and/or smoke based on video analysis. To this end, the fire detection unit 200 may include a video image acquisition unit 210 for acquiring a video image from the video data and partitioning the video image into a plurality of blocks, a video processing unit 220 for detecting a flame area and/or a smoke area from the video image partitioned into a plurality of blocks, and a detection result output unit 230 for calculating the area and/or number of the detected flame areas and/or smoke areas, comparing the calculated area and/or number of flame areas and/or smoke areas with a fire occurrence reference value, and outputting a comparison result as a detection result of a fire sign.

The image acquisition unit 210 may receive a video from the video monitoring unit 100 and generate a video image corresponding to a still screen from the received video. In addition, the image acquisition unit 210 may partition the video image into a plurality of blocks set in advance. At this point, the image acquisition unit 210 may generate a plurality of blocks by partitioning the video image into a preset number and/or size.

The video processing unit 220 may detect a flame area and/or a smoke area from the video image according to a set method.

First, describing a flame area detection method of the video processing unit 220, the video processing unit 220 may detect a flame area from a video image by utilizing YCbCr (a sampling frequency ratio of luminance signal and chrominance signal) (Y: luminance, CbCr: color).

More specifically, the video processing unit 220 may convert the video image into a preset YCbCr (a sampling frequency ratio of luminance signal and color difference signal) (Y: luminance, CbCr: color) color space. In addition, the video processing unit 220 may remove harmful effects which generate illuminance in the YCbCr color space with reference to Equation 1 below.

[Equation 1]

$$F_{(xy)} = \begin{cases} if\ (Y_{(x,y)} > Y\ mean) \\ 1, Cb(x,y) < Cb\ mean \\ Cr(x,y) > Cr\ mean \\ 0, in\ other\ cases \end{cases}$$

In addition, the video processing unit 220 may define a point of (x, y) satisfying 1 in Equation 1 as a flame pixel.

[Equation 2]

$$F_r{}_{(x,y)} = \begin{cases} 1, if\ |Cr(x,y) - Cr(x,y)| \geq \tau \\ 0, in\ other\ cases \end{cases}$$

In Equation 2, $\tau$ is a constant and may be determined by ROC (Receiver Operating Characteristics) analysis.

Here, the ROC is a graph of hit probability versus false alarm probability in the signal detection theory, and in the ROC graph, bottom left (0, 0) refers to a classifier that never says "exist", which may mean neither generation of an omission nor hitting as shown in FIG. 16. On the contrary, top right (1,1) is a case of unconditionally "exist", and top left (0,1) may mean making a perfect classification. That is, it may be more conservative toward the bottom left and more adventurous toward the top right.

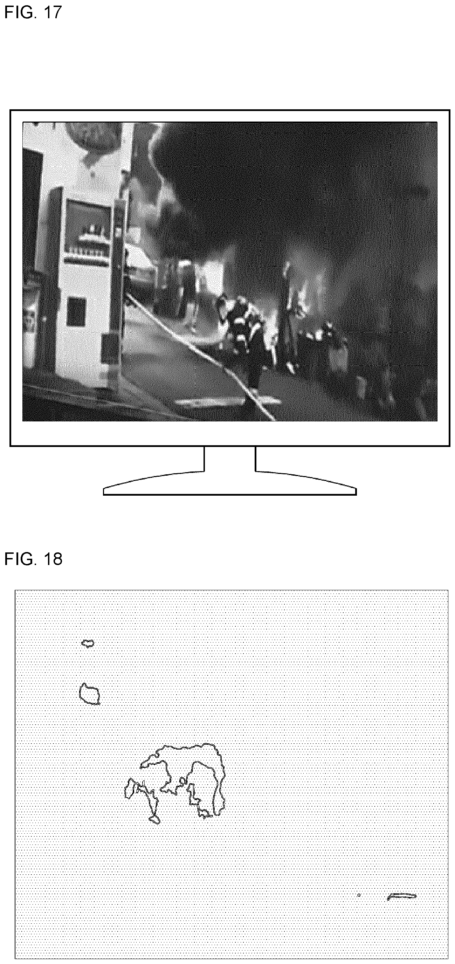

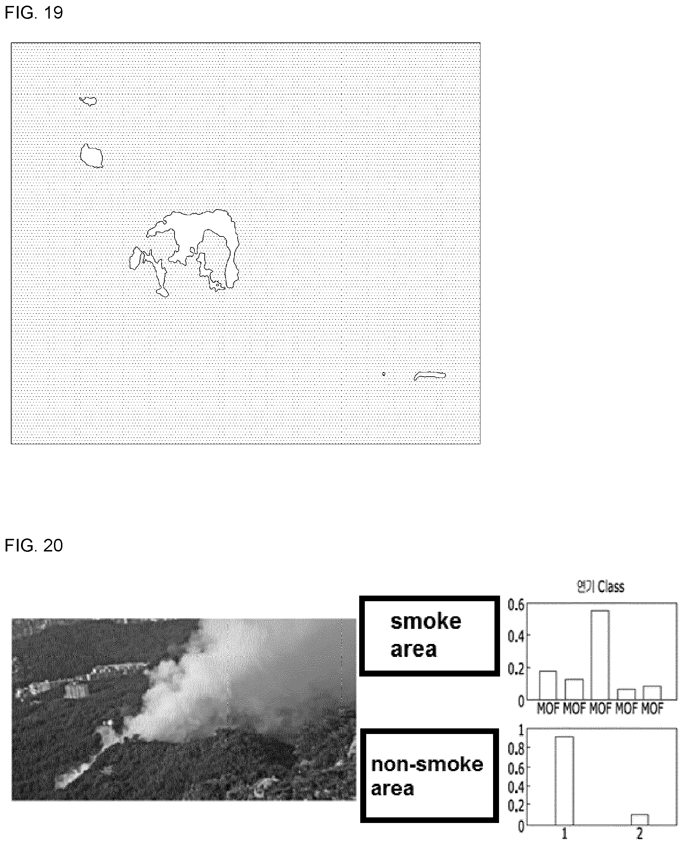

In addition, the video processing unit 220 may determine the flame area of FIG. 19 from the flame candidate area by separating the flame candidate area of FIG. 18 from the video image of FIG. 17 and processing the flame candidate area. Here, the video processing unit 220 determines the flame area by analyzing the flame candidate area according to flame determination criteria, and the flame determination criteria may be set to include at least one among irregularities observed on the flame surface, roughness of the flame, the amount of change in the flame area, and the third-order probability moment of the fire zone. At this point, the third-order probability moment may be obtained with reference to Equation 3 shown below.

[Equation 3]

$$Third - order\ moment = \mathrm{E}[(\mathrm{X} - \mu)^3] : Skewness$$

Next, describing a smoke area detection method of the video processing unit 220, the video processing unit 220 may detect a candidate smoke area from a video image by applying a random forest classification technique to the video image.

Here, since the particle size of smoke is 0.1 to 1$\mu$m, the smoke is very light and has a characteristic of rising in the air, and is in colors of white, gray and black, and it is preferable to detect the smoke by utilizing three features of brightness, motion accumulation, and spread. In addition, since outdoor smoke is greatly affected by external environmental variables, it is preferable to apply a random forest classification technique.

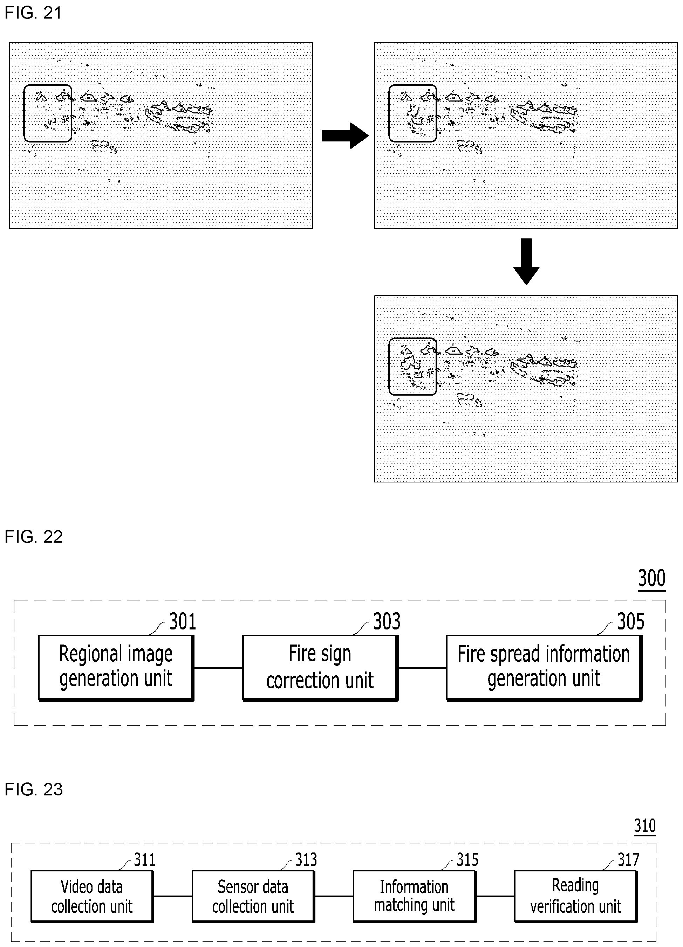

More specifically, the video processing unit 220 may compare continuously photographed video images and set a block of a smoke candidate area greater than or equal to a detection reference value as a region of interest. In addition, the video processing unit 220 may learn different random forests for a plurality of regions of interest, and generate a cumulative probability histogram as shown in FIG. 20 by accumulating classes generated as a result of the learning. In addition, the video processing unit 220 may determine a smoke area from the generated histogram. Therefore, the video processing unit 220 may detect the outer periphery of the spread smoke as shown in FIG. 21.

In addition, the random forest is an ensemble method of learning a plurality of decision trees, which is a method of configuring a forest with uncorrelated trees by using a classification and regression tree (CART), such as a method combining randomized node optimization and bootstrap aggregating bagging. The random forest like this may have characteristics such as high accuracy, a simple and fast learning and testing algorithm, and generalization through randomization.

After calculating the block area and/or the number of blocks of the detected flame area and/or smoke area, and comparing the calculated block area and/or number of blocks of the detected flame area and/or smoke area with a fire occurrence reference value, the detection result output unit 230 may output a detection result of a fire sign when the block area and/or the number of blocks is larger than the fire occurrence reference value.

When the fire detection unit 200 detects a fire sign, the control support unit 300 may notify a detection result of the fire sign by transmitting the detection result to the control terminal of a control person working at the site and/or the control room to display the detection result as a pop-up notification and/or a sound output on the control terminal. At this point, the control support unit 300 may support control of fire occurrence so that the control person may more effectively inform and warn the site after finally reviewing the visualized fire occurrence area through the pop-up window of the control terminal. That is, the control support unit 300 may support the control person to confirm whether or not a fire has occurred through a decision-making support system.

To this end, referring to FIG. 22, the control support unit 300 may include a regional image generation unit 301 for generating an image in a 2D or 3D region by reflecting information on the drawings of a building structure on the basis of information on a location where the fire sign is detected, a fire sign correction unit 303 for receiving any one or more environmental information among illuminance, temperature, humidity, wind direction, and wind speed of the region through a weather information sensor installed inside and/or outside the building structure, and correcting the detected fire sign, and a fire spread information generation unit 305 for calculating and additionally generating a surrounding area in which fire spread is expected within a set time through the region, on the basis of the fire sign and the environmental information.

When the fire detection unit 200 detects a fire sign, the control supplement unit 310 may perform a control supplement function to improve accuracy of decision-making on whether or not a fire has occurred. To this end, referring to FIG. 23, the control supplement unit 310 may include a video data collection unit 311 for collecting video data on a surveillance space and/or a surveillance area, a sensor data collection unit 313 for collecting sensor data through a sensor installed at a location corresponding to a region confirmed through the video data, an information matching unit 315 for matching flame generation and/or smoke generation information confirmed through the video data with generation and/or lasting of abnormal temperature and/or abnormal humidity collected through the sensor data, and a reading verification unit 317 for performing a control supplement function by finally determining whether or not a fire has occurred on the basis of a result of the matching.

Here, the information matching unit 315 may perform at least one matching function among a first matching function of determining whether a flame is generated by matching a video data of flame generation and a first sensor data of the flame, a second matching function of determining whether smoke is generated by matching a video data of smoke generation and a second sensor data of the smoke, and a third matching function of detecting an abnormal temperature by matching a video data of the abnormal temperature and a third sensor data of the temperature.

The control supplementary unit 310 is for improving accuracy of determination on whether or not a fire has occurred in a corresponding region through comprehensive analysis using sensor data collected through a sensor for detecting at least one among flame, smoke, temperature and humidity, as well as video data collected through video surveillance devices including a CCTV and the like to more accurately detect and determine whether or not a fire has occurred.

The remote control supplement unit 400 may support to complementarily confirm whether or not a fire has occurred through remote support in a situation in which additional response is required, such as when there is no reaction (response) within a set time from the site and/or the control room. When the decision-making on whether or not a fire has occurred is not processed at the site and/or the control room for a set period of time depending on a situation, the remote control supplement unit 400 may support to process the decision-making on whether or not a fire has occurred by way of remote support to promptly deal with the fire.

For example, the remote control supplement unit 400 may receive and process decision-making on whether or not a fire has occurred through remote support after notifying the detection result of a fire sign to a control terminal and/or a portable terminal of a supervisor and/or a colleague of the control person. In addition, when the control person is not on the site and/or in the control room, the remote control supplement unit 400 may receive and process the decision-making on whether or not a fire has occurred through remote support after notifying the detection result of a fire sign to the portable terminal, as well as the control terminal.

The fire notification unit 500 may perform notification and/or warning of a fire in a surveillance space and/or a surveillance area where occurrence of fire has been confirmed, and support subsequent actions such as fire evacuation or the like. For example, the fire notification unit 500 may transmit a fire notification broadcast using a speaker or turn on a fire indication lamp using a lighting device.

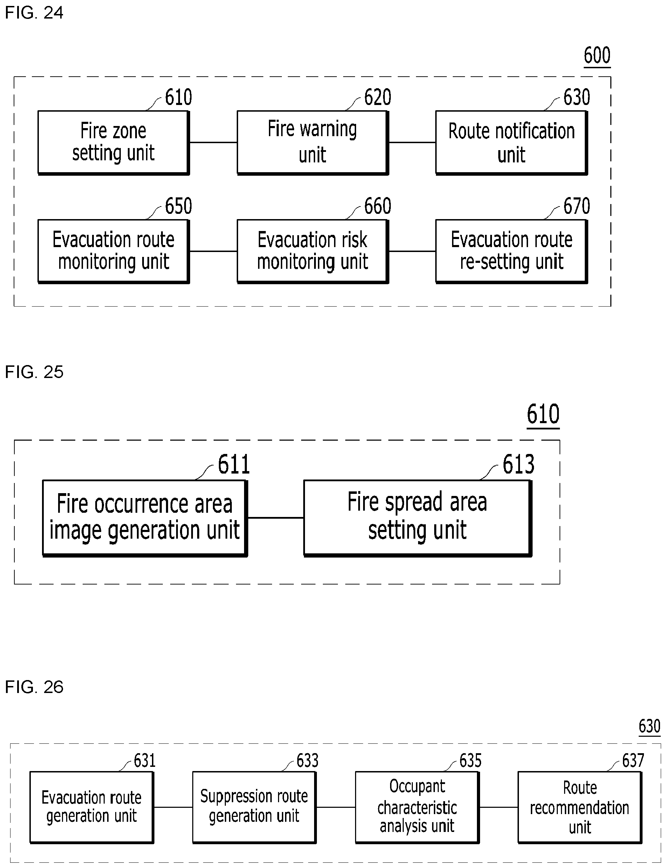

Referring to FIG. 24, the route information providing unit 600 may include a fire zone setting unit 610 for separating a fire occurrence area and/or a fire spread area, a fire warning unit 620 for performing transmission of a warning broadcast and/or lighting of a warning emergency lamp, and a route notification unit 630 for calculating a fire evacuation route and/or a fire suppression route, and selectively informing evacuees and/or suppressors of the fire evacuation route and/or the fire suppression route.

Referring to FIG. 25, the fire zone setting unit 610 may include a fire occurrence area image generation unit 611 for generating an image in a 2D or 3D region by reflecting information on the drawings of a building structure on the basis of information on a location corresponding to the fire occurrence area, and a fire spread area setting unit 613 for additionally calculating and setting a fire spread area in which fire spread is expected within a set time through the fire occurrence area on the basis of fire classes of the fire occurrence area and an area in the neighborhood of the fire occurrence area and/or information on wind direction and/or wind speed affecting the fire occurrence area and the neighboring area, and distinguishing the fire occurrence area and the fire spread area.

The fire warning unit 630 may transmit a broadcast signal to output a warning broadcast using a speaker, or transmit a lighting signal to turn on a warning emergency lamp using a warning display device.

The route notification unit 630 may provide evacuees and suppressors with visualized information about an optimal fire evacuation route and fire suppression route when a fire occurs. To this end, referring to FIG. 26, the route notification unit 630 is may include an evacuation route generation unit 631 for generating at least one fire evacuation route on the basis of fire occurrence area information (image), fire spread area information (image), and passage information of a building structure including the fire occurrence area and the fire spread area, a suppression route generation unit 633 for generating at least one fire suppression route on the basis of fire occurrence area information (image), fire spread area information (image), and passage information of a building structure including the fire occurrence area and the fire spread area, an occupant characteristic analysis unit 635 for confirming whether an occupant located inside the building structure is an evacuee or a suppressor, and a route recommendation unit 637 for recommending an evacuation route when the occupant is an evacuee or a suppression route when the occupant is an evacuee.

The route notification unit 650 like this may guide a fire evacuation route and/or a fire suppression route by setting a display color and/or a flashing pattern of a previously installed route display device.

Meanwhile, the route information providing unit 600 may further include an evacuation route monitoring unit 650 for monitoring an evacuation situation of an evacuee to a set evacuation route, an evacuation risk monitoring unit 660 for confirming in real-time whether the evacuee's evacuation route overlaps with the fire spread area according to spread prediction information in real-time and/or within a set time, and an evacuation route re-setting unit 670 for re-setting the evacuation route when overlapping of the evacuation route and the fire spread area is expected.

A fire detection system according to still another embodiment of the present invention may remotely monitor occurrence of a fire, such as a flame or smoke that may generate at a site, using video monitoring.

In addition, a fire detection system according to still another embodiment of the present invention may improve convenience of decision-making by generating an image of a fire occurrence area in association with information on the drawings of a building structure and supporting the decision-making on whether or not a fire has occurred.

In addition, a fire detection system according to still another embodiment of the present invention may improve accuracy of fire signs by correcting errors of a fire by linking and reflecting information on the environment inside and outside a fire occurrence area.

In addition, a fire detection system according to still another embodiment of the present invention may reduce additional damage caused by fire spread by predicting a fire spread direction and supporting additional control.

In addition, a fire detection system according to still another embodiment of the present invention may additionally match and verify sensor data as needed to prevent a determination error that may occur when a fire is detected based only on video data, and thus improve accuracy of fire detection.

In addition, a fire detection system according to still another embodiment of the present invention may calculate an effective fire evacuation route and/or fire suppression route by distinguishing a fire occurrence area and a fire spread area in association with information on the drawings of a building structure.

In addition, a fire detection system according to still another embodiment of the present invention may improve accuracy of prediction on fire spread by setting a fire spread area on the basis of fire class, wind direction, and wind speed.

In addition, a fire detection system according to still another embodiment of the present invention may classify an occupant and provide differentiated information to the occupant.

In addition, a fire detection system according to still another embodiment of the present invention may set a safe evacuation route and an effective suppression route by monitoring evacuation routes and fire spread in real-time, and provide the routes to evacuees and/or suppressors.

According to an embodiment of the present invention, it is possible to remotely monitor occurrence of a fire, such as a flame or smoke that may generate at a site, using video monitoring.

In addition, according to an embodiment of the present invention, it is possible to improve convenience of decision-making by generating an image of a fire occurrence area in association with information on the drawings of a building structure and supporting the decision-making on whether or not a fire has occurred.

In addition, according to an embodiment of the present invention, it is possible to improve accuracy of fire signs by correcting errors of a fire by linking and reflecting information on the environment inside and outside a fire occurrence area.

In addition, according to an embodiment of the present invention, it is possible to reduce additional damage caused by fire spread by predicting a fire spread direction and supporting additional control.

In addition, according to an embodiment of the present invention, it is possible to additionally match and verify sensor data as needed to prevent a determination error that may occur when a fire is detected based only on video data, and thus improve accuracy of fire detection.

In addition, according to an embodiment of the present invention, it is possible to calculate an effective fire evacuation route and/or fire suppression route by distinguishing a fire occurrence area and a fire spread area in association with information on the drawings of a building structure.

In addition, according to an embodiment of the present invention, it is possible to improve accuracy of prediction on fire spread by setting a fire spread area on the basis of fire class, wind direction, and wind speed.

In addition, according to an embodiment of the present invention, it is possible to classify an occupant and provide differentiated information to the occupant.

In addition, according to an embodiment of the present invention, it is possible to provide a fire detection method and system, which can set a safe evacuation route and an effective suppression route by monitoring evacuation routes and fire spread in real-time, and provide the routes to evacuees and/or suppressors.

It should be understood that the effects of the present invention are not limited to the above-described effects, and include all effects that can be deduced from the configuration of the invention described in the detailed description or claims of the present invention.

The description of the present invention described above is for exemplary purpose, and those skilled in the art may understand that the present invention may be easily modified in other specific forms without changing the spirit and essential features of the present invention. Therefore, it should be understood that the embodiments described above are illustrative and not restrictive in all respects. For example, each constitutional element described as an individual form may be embodied to be distributed, and in the same manner, constitutional elements described as being distributed may also be embodied in an aggregated form.

The scope of the present invention is indicated by the claims described below, and should be construed to include the meaning and scope of the claims and any changed or modified forms derived from the equivalent concept thereof within the scope of the present invention.

**Claims**

1. A fire detection method comprising:

   a video monitoring step of performing real-time video monitoring on a set surveillance space and/or surveillance area;
   a fire detection step of detecting a fire sign on the basis of analysis of video data;
   a control step of supporting a control person using a display means to make a decision on whether or not a fire has occurred;
   a control supplement step of supporting a control supplement function for improving accuracy of the decision-making;
   a remote control supplement step of supplementing the decision-making on whether or not a fire has occurred by way of remote support in a situation where there is no response from a control person within a set time;
   a fire notification step of performing fire notification and warning in a surveillance space and/or a surveillance area where occurrence of fire has been confirmed; and
   a fire evacuation step of providing evacuees and suppressors with set information on an optimal fire preparation route and fire suppression route.

2. The method according to claim 1, wherein the fire detection step includes:

   a video image acquisition step of acquiring a video image from the video data and partitioning the video image into a plurality of blocks;
   a video processing step of detecting a flame area and/or a smoke area from the video image partitioned into a plurality of blocks; and
   a detection result output step of calculating the area and/or number of the detected flame areas and/or smoke areas, comparing the calculated area and/or number of flame areas and/or smoke areas with a fire occurrence reference value, and outputting a comparison result as a detection result of a fire sign.

3. The method according to claim 1, wherein when a fire sign is detected at the fire detection step, the control step includes:

   a regional image generation step of generating an image in a 2D or 3D region by reflecting information on drawings of a building structure on the basis of information on a location where the fire sign is detected;
   an environment correction step of receiving any one or more environmental information among illuminance, temperature, humidity, wind direction, and wind speed of the region through a weather information sensor installed inside and/or outside the building structure, and correcting the detected fire sign; and
   a fire spread information generation step of calculating and additionally generating a surrounding area in which fire spread is expected within a set time through the region, on the basis of the fire sign and the environmental information.

4. The method according to claim 1, wherein when a fire sign is detected at the fire detection step, the control supplement step includes:

   a sensor data collection step of collecting sensor data through a sensor installed at a location corresponding to a region confirmed through the video data;
   a video-sensing information matching step of matching flame generation and/or smoke generation information confirmed through the video data with generation and/or lasting of abnormal temperature and/or abnormal humidity collected through the sensor data; and
   a reading verification step of performing a control supplement function by finally determining whether or not a fire has occurred on the basis of a result of the matching.

5. The method according to claim 1, wherein the fire evacuation step includes:

   a partitioning step of separating a fire occurrence area and/or a fire spread area;
   a warning step of performing transmission of a warning broadcast and/or lighting of a warning emergency lamp;

and

a route notification step of calculating a fire evacuation route and/or a fire suppression route, and selectively informing the evacuees and/or the suppressors of the fire evacuation route and/or the fire suppression route.

6. The method according to claim 5, wherein the partitioning step includes:

a fire occurrence area image generation step of generating an image in a 2D or 3D region by reflecting information on drawings of a building structure on the basis of information on a location corresponding to the fire occurrence area; and

a fire spread area image generation step of additionally generating an image of the fire spread area by calculating a fire spread area in which fire spread is expected within a set time through the fire occurrence area on the basis of fire classes of the fire occurrence area and an area in the neighborhood of the fire occurrence area and/or information on wind direction and/or wind speed affecting the fire occurrence area and the neighboring area, and distinguishing the fire occurrence area and the fire spread area.

7. The method according to claim 5, wherein the route notification step includes:

an evacuation route generation step of generating at least one fire evacuation route on the basis of the fire occurrence area, the fire spread area, and passage information of a building structure including the fire occurrence area and the fire spread area;

a suppression route generation step of generating at least one fire suppression route on the basis of the fire occurrence area, the fire spread area, and passage information of a building structure including the fire occurrence area and the fire spread area;

an occupant characteristic analysis step of confirming whether an occupant located inside the building structure is an evacuee or a suppressor; and

a route recommendation step of recommending an evacuation route when the occupant is an evacuee or a suppression route when the occupant is an evacuee.

8. A fire detection system comprising:

a video monitoring unit for performing real-time video monitoring on a surveillance space and/or a surveillance area;

a fire detection support unit for detecting a fire sign on the basis of analysis of video data;

a control unit for supporting a control person using a display means to make a decision on whether or not a fire has occurred;

a control supplement unit for supporting a control supplement function for improving accuracy of the decision-making;

a remote control supplement unit for supplementing the decision-making on whether or not a fire has occurred by way of remote support in a situation where there is no response from a control person within a set time;

a fire notification unit for performing fire notification and warning in a surveillance space and/or a surveillance area where occurrence of fire has been confirmed; and

a route information providing unit for providing evacuees and suppressors with set information on an optimal fire preparation route and fire suppression route.

9. The system according to claim 8, wherein the fire detection unit includes:

a video image acquisition unit for acquiring a video image from the video data and partitioning the video image into a plurality of blocks;

a video processing unit for detecting a flame area and/or a smoke area from the video image partitioned into a plurality of blocks; and

a detection result output unit for calculating the area and/or number of the detected flame areas and/or smoke areas, comparing the calculated area and/or number of flame areas and/or smoke areas with a fire occurrence reference value, and outputting a comparison result as a detection result of a fire sign.

10. The system according to claim 8, wherein the control support unit includes:

a regional image generation unit for generating an image in a 2D or 3D region by reflecting information on the drawings of a building structure on the basis of information on a location where the fire sign is detected;

a fire sign correction unit for receiving any one or more environmental information among illuminance, temperature, humidity, wind direction, and wind speed of the region through a weather information sensor installed inside and/or outside the building structure, and correcting the detected fire sign; and

a fire spread information generation unit for calculating and additionally generating a surrounding area in which fire spread is expected within a set time through the region, on the basis of the fire sign and the environmental information.

**11.** The system according to claim 8, wherein the control supplement unit includes:

a sensor data collection unit for collecting sensor data through a sensor installed at a location corresponding to a region confirmed through the video data;

an information matching unit for matching flame generation and/or smoke generation information confirmed through the video data with generation and/or lasting of abnormal temperature and/or abnormal humidity collected through the sensor data; and

a reading verification unit for performing a control supplement function by finally determining whether or not a fire has occurred on the basis of a result of the matching.

**12.** The system according to claim 8, wherein the route information providing unit includes:

a fire zone setting unit for separating a fire occurrence area and/or a fire spread area;

a fire warning unit for performing transmission of a warning broadcast and/or lighting of a warning emergency lamp; and

a fire notification unit for calculating a fire evacuation route and/or a fire suppression route, and selectively informing evacuees and/or suppressors of the fire evacuation route and/or the fire suppression route.

**13.** The system according to claim 12, wherein the fire zone setting unit includes:

a fire occurrence area image generation unit for generating an image in a 2D or 3D region by reflecting information on the drawings of a building structure on the basis of information on a location corresponding to the fire occurrence area; and

a fire spread area setting unit for additionally calculating and setting a fire spread area in which fire spread is expected within a set time through the fire occurrence area on the basis of fire classes of the fire occurrence area and an area in the neighborhood of the fire occurrence area and/or information on wind direction and/or wind speed affecting the fire occurrence area and the neighboring area, and distinguishing the fire occurrence area and the fire spread area.

**14.** The system according to claim 12, wherein the fire notification unit includes:

an evacuation route generation unit for generating at least one fire evacuation route on the basis of the fire occurrence area, the fire spread area, and passage information of a building structure including the fire occurrence area and the fire spread area;

a suppression route generation unit for generating at least one fire suppression route on the basis of the fire occurrence area, the fire spread area, and passage information of a building structure including the fire occurrence area and the fire spread area;

an occupant characteristic analysis unit for confirming whether an occupant located inside the building structure is an evacuee or a suppressor; and

a route recommendation unit for recommending an evacuation route when the occupant is an evacuee or a suppression route when the occupant is an evacuee.

**15.** The system according to claim 12, wherein the route information providing unit further includes:

an evacuation route monitoring unit for monitoring an evacuation situation of an evacuee to a set evacuation route;

an evacuation risk monitoring unit for confirming in real-time whether the evacuee's evacuation route overlaps with the fire spread area according to spread prediction information in real-time and/or within a set time; and

an evacuation route re-setting unit for re-setting the evacuation route when overlapping of the evacuation route and the fire spread area is expected.

FIG. 1

```
                              ┌─ S100
                    ┌──────────────────────┐
                    │  Sensor detection and │
                    │  video monitoring step │
                    └──────────────────────┘
                              │
                              ▼  ┌─ S200
                    ┌──────────────────────┐
                    │   Fire detection step  │
                    └──────────────────────┘
                              │
   ┌─ S500                    ▼  ┌─ S300          ┌─ S310
┌────────────────┐  (O)   ◇──────────◇   ◇──────┌────────────────────────┐
│ Fire notification │ ◄──── │ Control step │ ◄──── │ Control supplement step  │
│      step       │        ◇──────────◇          └────────────────────────┘
└────────────────┘              │      (X)
        ▲                       │         ┌──────────┐
        │                    △  │         │   End    │
        │                       ▼         └──────────┘
        │     (O)  ◇──────────────◇  (X)       ▲
        └──────────│ Remote control │──────────┘
                   │ supplement step │
                   ◇──────────────◇
```

FIG. 2

```
                    ┌─ S200
          ┌──────────────────────┐
          │   Fire detection step  │
          └──────────────────────┘
                    │
                    ▼  ┌─ S210
          ┌──────────────────────┐
          │   Acquire video image  │
          └──────────────────────┘
                    │
                    ▼  ┌─ S220
          ┌──────────────────────┐
          │     Process video     │
          └──────────────────────┘
                    │
          ┌─────────┴──────────┐
          ▼  ┌─ S222            ▼  ┌─ S224
  ┌──────────────────┐  ┌──────────────────┐
  │ Determine flame area │ │ Detect smoke area │
  └──────────────────┘  └──────────────────┘
          └─────────┬──────────┘
                    ▼  ┌─ S230
          ┌──────────────────────┐
          │  Output fire sign and  │
          │    detection result    │
          └──────────────────────┘
```

FIG. 3

S222

Flame area detection step

↓

S222-1

Convert color space

↓

S222-3

Separate flame candidate area

↓

S222-5

Determine flame area

FIG. 4

S222-5

Flame area determination step

↓

S222-5-1

Remove harmful effects

↓

S222-5-3

Analyze flame candidate area

FIG. 5

S224
Smoke area detection step

S224-1
Detect smoke candidate area

S224-3
Set region of interest

S224-5
Learn random forest

S224-7
Generate cumulative
probability histogram

S224-9
Determine smoke area

FIG. 6

S300
Control step

S300-1
Generate regional image

S300-3
Correct fire sign

S300-5
Generate fire spread information

FIG. 7

```
                                      ┌─S310
                    ┌─────────────────────────┐
                    │  Control supplement step │
                    └─────────────────────────┘
                                 │
                                 ▼        ┌─S311
                    ┌─────────────────────────┐
                    │     Fetch video data     │
                    └─────────────────────────┘
                                 │
                                 ▼        ┌─S313
                    ┌─────────────────────────┐
                    │     Fetch sensor data    │
                    └─────────────────────────┘
```

S315

| First sensor data (Flame): Determine whether or not flame is generated | Second sensor data (Smoke): Determine whether or not smoke is generated | Third sensor data (Temperature): Detect abnormal temperature |

S315-1     S315-3     S315-5

S317

Finally determine whether or not fire has occurred

FIG. 8

Scan in elevation / Scan in Azimuth

Scan in elevation / Scan in Azimuth

Scan in elevation / Scan in Azimuth

Cold

HOT

Small tree

Charcoal fire

Small tree in front of charcoal

FIRE ALARM

CALL 911

FIG. 9

```
                                          ┌─S100
                              ┌──────────────────────────┐
                              │  Sensor detection and    │
                              │  video monitoring step   │
                              └──────────────┬───────────┘
                                             │      ┌─S200
                              ┌──────────────▼───────────┐
                              │    Fire detection step   │
                              └──────────────┬───────────┘
   ┌─S600          ┌─S500                    │        ┌─S300
┌──────────┐   ┌──────────────┐      (O)    ◇◇◇◇◇◇◇◇◇◇◇◇◇◇
│   Fire   │   │     Fire     │◄──────────◇   Control step   ◇
│evacuation│◄──│ notification │           ◇◇◇◇◇◇◇◇◇◇◇◇◇◇◇◇◇◇◇
│   step   │   │     step     │                  │     (X)     ┌──────┐
└──────────┘   └──────▲───────┘                  │         ───►│ End  │
                      │                          △             └──▲───┘
                      │                          │                │
                      │                   ┌─S400 ▼                │
                (O)   │           ◇◇◇◇◇◇◇◇◇◇◇◇◇◇◇◇◇  (X)         │
                      └──────────◇ Remote control    ◇───────────┘
                                 ◇ supplement step   ◇
                                  ◇◇◇◇◇◇◇◇◇◇◇◇◇◇◇◇◇◇◇
```

FIG. 10

S600
Fire evacuation step

S610
Separate (partition) fire zone

S630
Transmit warning broadcast and/
or turn on warning emergency lamp

S650
Calculate and notify route

S650a
Monitor evacuation route

S650b
Monitor evacuation risk

S650c
Re-set evacuation route

FIG. 11

S610
Partitioning step

S611
Generation of fire
occurrence area image

S612
Generation of fire
spread area image

FIG. 12

FIG. 13

S650
Route notification step

S651
Generate evacuation route

S652
Generate suppression route

S653
Analyze occupant characteristic

S654
Recommend route

FIG. 14

FIG. 15

FIG. 16

EP 3 779 911 A1

FIG. 17

FIG. 18

FIG. 19

FIG. 20

FIG. 21

FIG. 22

300

| Regional image generation unit 301 | Fire sign correction unit 303 | Fire spread information generation unit 305 |

FIG. 23

310

| Video data collection unit 311 | Sensor data collection unit 313 | Information matching unit 315 | Reading verification unit 317 |

FIG. 24

<u>600</u>

```
┌────────────────────────────────────────────────────────────────┐
│      ╱610              ╱620                    ╱630             │
│  ┌──────────────┐  ┌──────────────┐    ┌──────────────────┐    │
│  │  Fire zone   │  │ Fire warning │    │ Route notification│   │
│  │ setting unit │──│    unit      │────│      unit         │   │
│  └──────────────┘  └──────────────┘    └──────────────────┘    │
│                                                                 │
│      ╱650              ╱660                    ╱670             │
│  ┌──────────────┐  ┌──────────────┐    ┌──────────────────┐    │
│  │Evacuation route│ │Evacuation risk│   │  Evacuation route │   │
│  │monitoring unit │─│monitoring unit│───│  re-setting unit  │   │
│  └──────────────┘  └──────────────┘    └──────────────────┘    │
└────────────────────────────────────────────────────────────────┘
```

FIG. 25

<u>610</u>

```
┌────────────────────────────────────────────────────────┐
│         ╱611                          ╱613             │
│  ┌──────────────────┐        ┌──────────────────┐      │
│  │ Fire occurrence area│      │  Fire spread area │     │
│  │image generation unit│──────│   setting unit    │     │
│  └──────────────────┘        └──────────────────┘      │
└────────────────────────────────────────────────────────┘
```

FIG. 26

<u>630</u>

```
┌──────────────────────────────────────────────────────────────────────────┐
│    ╱631              ╱633              ╱635              ╱637              │
│┌──────────────┐ ┌──────────────┐ ┌──────────────┐ ┌──────────────┐        │
││Evacuation route│ │Suppression route│ │  Occupant    │ │    Route     │    │
││generation unit │─│generation unit │─│characteristic │─│recommendation│    │
││              │ │              │ │analysis unit │ │    unit      │        │
│└──────────────┘ └──────────────┘ └──────────────┘ └──────────────┘        │
└──────────────────────────────────────────────────────────────────────────┘
```

EP 3 779 911 A1

**EUROPEAN SEARCH REPORT**

Europäisches Patentamt
European Patent Office
Office européen des brevets

Application Number

EP 20 19 0192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 934 700 B1 (DONGWOOUNION [KR]) 3 January 2019 (2019-01-03) | 1-3, 5-10, 12-15 | INV. G08B17/12 G08B25/14 G08B7/06 |
| Y | * figures 1,5A * <br> * paragraph [0001] * <br> * paragraph [0025] * <br> * paragraph [0026] * <br> * paragraph [0039] * <br> * paragraph [0047] * <br> * paragraph [0050] * <br> * paragraph [0057] * <br> * paragraph [0070] * <br> * paragraph [0075] * <br> ----- | 4,11 | |
| Y | XIAOJUAN CHEN ET AL: "Research of Fire Detection Method Based on Multi-Sensor Data Fusion", COMPUTATIONAL INTELLIGENCE AND SOFTWARE ENGINEERING (CISE), 2010 INTERNATIONAL CONFERENCE ON, IEEE, PISCATAWAY, NJ, USA, 10 December 2010 (2010-12-10), pages 1-4, XP031841700, ISBN: 978-1-4244-5391-7 * abstract * * figure 1 * ----- | 4,11 | TECHNICAL FIELDS SEARCHED (IPC) <br><br> G08B |

The present search report has been drawn up for all claims

| Place of search | Date of completion of the search | Examiner |
|---|---|---|
| Munich | 14 December 2020 | Plathner, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

31

## EP 3 779 911 A1

## ANNEX TO THE EUROPEAN SEARCH REPORT
## ON EUROPEAN PATENT APPLICATION NO.

EP 20 19 0192

14-12-2020

| Patent document cited in search report | Publication date | Patent family member(s) | Publication date |
|---|---|---|---|
| KR 101934700 B1 | 03-01-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190098794